(19) Europäisches Patentamt
European Patent Office
Office européen des brevets

(11) Publication number: **0 275 186 A2**

(12) **EUROPEAN PATENT APPLICATION**

(21) Application number: **88300235.4**

(22) Date of filing: **12.01.88**

(51) Int. Cl.⁴: **C 08 L 77/00**
C 08 L 9/00, C 08 L 51/00,
C 08 L 55/02

(30) Priority: **12.01.87 JP 4423/87**

(43) Date of publication of application:
**20.07.88 Bulletin 88/29**

(84) Designated Contracting States: **DE GB NL**

(71) Applicant: **JAPAN SYNTHETIC RUBBER CO., LTD.**
**11-24, Tsukiji-2-chome Chuo-ku**
**Tokyo 104 (JP)**

(72) Inventor: **Ono, Hisao**
**1-15-304, Morigayamacho**
**Yokkaichi-shi (JP)**

**Nagano, Masanobu**
**1145, Yamajocho**
**Yokkaichi-shi (JP)**

**Sato, Hozumi**
**1-15-101, Morigayamacho**
**Yokkaichi-shi (JP)**

**Miyachi, Takumi**
**1-4-203, Morigayamacho**
**Yokkaichi-shi (JP)**

(74) Representative: **Clifford, Frederick Alan et al**
**MARKS & CLERK 57/60 Lincoln's Inn Fields**
**London WC2A 3LS (GB)**

(54) **Thermoplastic polymer composition.**

(57) A thermoplastic polymer composition consisting essentially of

(A) 20-99% by weight of (i) a polyamide, (ii) a polyamide elastomer or a mixture thereof and

(B) 80-1% by weight of a rubber component which is a copolymer of (1) 70 - 99.98% by weight of a rubber, (2) 0.01-20% by weight of a crosslinking monomer and (3) 0.01-20% by weight of an olefinically unsaturated monomer having a carboxyl group, an epoxy group or both thereof and which has an average particle diameter of not more than 10 μm and a gel content of at least 20%. Said composition is superior in permanent compression set, flex resistance, mechanical strengths, heat resistance and oil resistance.

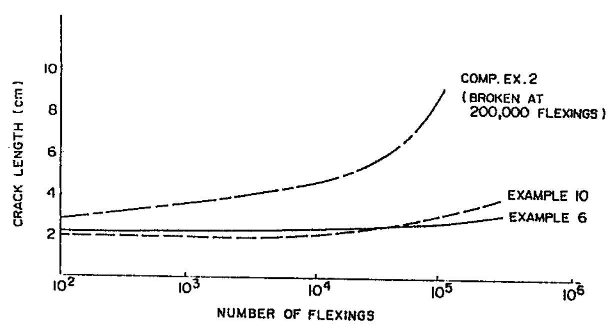


EP 0 275 186 A2

## Description

# THERMOPLASTIC POLYMER COMPOSITION

## BACKGROUND OF THE INVENTION

### FIELD OF THE INVENTION

This invention relates to a thermoplastic polymer composition having an improved flexibility and permanent compression set and an excellent flex resistance and mechanical strengths.

### DESCRIPTION OF THE PRIOR ART

Polyamides are widely used in, for example, tubes, hoses, electric and electronic components and automotive parts, as a resin material superior in heat resistance, oil resistance and mechanical strengths. However, they have poor flexibility, so the workability of the molded articles produced therefrom is not satisfactory. Particularly, when the molded articles are used as a part requiring periodical replacement, for example, a tube for automobiles, that the part is inferior in fitting workability is a serious disadvantage as compared with a part made of a vulcanized rubber. Further, when a polyamide is subjected to extrusion molding to produce a hose, a tube or the like, the extrusion molding is difficult because the polyamide is a crystalline polymer and the temperature dependency of its melt viscosity is great.

In order to render a polyamide flexible, blending of the polyamide with a plasticizer is known. In this case, bleeding of the plasticizer or volatilization of the plasticizer at high temperatures is a serious problem. Also, addition of a plasticizer makes higher the temperature dependency of the viscosity of the polyamide.

Many proposals have heretofore been made on thermoplastic compositions consisting of (a) a polyamide and/or a polyamide elastomer and (b) a rubber. Japanese Patent Publication No. 44,108/80 and Japanese Patent Application Kokai (Laid-Open) No. 147,519/82 disclose compositions of a polyamide and an olefin copolymer; and Japanese Patent Application Kokai (Laid-Open) No. 105,952/77 disclose a composition consisting of (a) a polyamide, (b) a 1,3-butadiene homopolymer having a gel content of at least 80% and (c) a copolymer of 1,3-butadiene with styrene, vinyl pyridine, acrylonitrile or methacrylonitrile.

These thermoplastic polymer compositions have a thermoplasticity together with a rubber-like elasticity, and accordingly, they are superior in processability to conventional vulcanized rubbers because they can be injection-molded, extrusion-molded and blow-molded. They are inferior, however, in permanent compression set; that is, once they have undergone deformation, the deformed shape is not fully returned to the original shape.

In Japanese Patent Publication No. 44,108/80 and Japanese Patent Application Kokai No. 147,519/82, it is proposed to improve the mechanical strengths of polyamide by the interaction between the functional group of the polyamide and that of a polyolefin; however, the thermoplastic compositions proposed have a poor permanent compression set. In Japanese Patent Application Kokai No. 105,952/77, it is proposed to improve the tensile strength of a polyamide by melt-mixing the polyamide with a 1,3-butadiene copolymer while adding thereto a vulcanizing agent for rubbers to vulcanize the rubber. In this method, however, the vulcanization requires a long time because the polyamide and the 1,3-butadiene copolymer are crosslinked by the vulcanizing agent, and the commercial productivity is low. In addition, it is difficult to reproduce the product, and the vulcanized rubber particles have large and nonuniform sizes and hence are inferior in flex resistance and flowability.

## SUMMARY OF THE INVENTION

An object of this invention is to provide a composition of (a) a polyamide and/or a polyamide elastomer and (b) a rubber, which is improved in flexibility, permanent compression set, mechanical strengths and flex resistance.

Other objects and advantages of this invention will become apparent from the following description.

According to this invention there is provided a thermoplastic polymer composition having an improved permanent compression set, mechanical strengths and flex resistance and consisting essentially of (A) 20 - 99% by weight of (i) a polyamide and/or (ii) a polyamide elastomer and (B) 80 - 1% by weight of a rubber component having an average particle diameter of not more than 10 $\mu$m and a gel content of at least 20% which is a copolymer of (1) 70 - 99.98% by weight of a rubber, (2) 0.01 - 20% by weight of a crosslinking monomer and (3) 0.01 - 20% by weight of an olefinically unsaturated monomer having a carboxyl group and/or an epoxy group.

## BRIEF DESCRIPTION OF THE DRAWINGS

The accompanying drawing is a graph showing the relationship between number of flexings and crack length of the compositions of Examples 6 and 10 and Comparative Example 2.

## DETAILED DESCRIPTION OF THE INVENTION

This invention aims at improving the softness of a composition obtained by complexing a rubber component with a polyamide and/or a polyamide elastomer by crosslinking the rubber component with a crosslinking

monomer and simultaneously copolymerizing the rubber component with a monomer having a carboxyl group and/or an epoxy group, thereby further improving the permanent compression set, mechanical strengths and flex resistance of the composition.

The polyamide (A) (i) of this invention includes, for example, polylactams such as nylon 6, nylon 11, nylon 12 and the like; polyamides obtained by reacting a dicarboxylic acid with a diamine, such as nylon 4-6, nylon 6-6, nylon 6-10, nylon 6-12 and the like; copolymeric polyamides such as nylon 6/6-6, nylon 6/6-10, nylon 6/12, nylon 6/6-12, nylon 6/6-6/6-10, nylon 6/6-6/12 and the like; nylon 6/6-T (T is a terephthalic acid component); and semi-aromatic polyamides obtained by reacting an aromatic dicarboxylic acid (e.g. isophthalic acid) with metaxylenediamine or an alicyclic diamine. Of these polyamides, nylon 11 and nylon 12 are most preferable.

The polyamide elastomer (A) (ii) is obtained by the condensation reaction of a polyether having hydroxyl groups at the chain terminals with a polyamide.

The polyether having hydroxyl groups at the chain terminals is a straight or branched chain polyoxyalkylene glycol (e.g. polyoxyethylene glycol, polyoxypropylene glycol, polyoxytetramethylene glycol or a mixture thereof) or a copolyether derived from one of these compounds. The polyether has generally an average molecular weight of 200 - 6,000, preferably 400 - 3,000.

The ratio of the weight of the polyoxyalkalene glycol to the total weight of the whole components is usually 5 - 85% by weight, preferably 10 - 50% by weight.

The polyamide used in the production of the polyamide elastomer includes, for example, polyamides obtained from lactams or amino acids whose hydrocarbon chain has 4 - 14 carbon atoms such as caprolactam, enantholactam, dodecalactam, undecanolactam, dodecanolactam, 11-amino-undecanoic acid and 12-aminododecanoic acid; and condensation products of a dicarboxylic acid and a diamine, for example, a condensation product of hexamethylenediamine with adipic acid, azelaic acid, sebacic acid or 1,12-dodecanedicarboxylic acid and a condensation product of nonamethylenediamine and adipic acid, namely, nylon 6-6, nylon 6-9, nylon 6-10, nylon 6-12 or nylon 9-6.

The dicarboxylic acids used as a chain length regulator in the synthesis of the polyamide makes it possible to obtain a polyamide having terminal carboxyl groups and includes dicarboxylic acids, preferably aliphatic dicarboxylic acids having 4 - 20 carbon atoms, for example, succinic acid, adipic acid, suberic acid, azelaic acid, sebacic acid, undecanedicarboxylic acid and dodecanedicarboxylic acid.

An alicyclic or aromatic dicarboxylic acid can also be used. These dicarboxylic acids are used in an amount larger than the theoretical amount necessary for obtaining a polyamide having a desired average molecular weight and calculated by the known calculation method currently used in the polycondensation field.

The dicarboxylic acid polyamide has usually an average molecular weight of 300 - 15,000, preferably 800 - 5,000.

The polycondensation reaction for producing a polyamide elastomer (A) (ii) is conducted by stirring the above-mentioned polyether and the above-mentioned polyamide in the presence of a catalyst under a highly reduced pressure of about 0.05 - 5 mmHg, at a temperature higher than the melting points of the raw materials used. The reaction temperature is selected so as to maintain the reaction system in a fluid state and is usually 100 - 400°C, preferably 200 - 300°C.

The reaction time may be varied in a range of from about 10 minutes to about 10 hours but is preferably about 1 - 7 hours.

The reaction time depends upon the properties of the polyoxyalkylene glycol used. The reaction time must be so sufficiently long as to be able to obtain the necessary final viscosity to obtain a product having sufficiently the properties required for moldable and/or extrudable plastic materials.

It is necessary that the carboxyl group of the polyamide and the hydroxyl group of the polyether be present in equimolar amounts in order to effect the polycondensation reaction under the optimum conditions to obtain a desired product.

The rubber (B) (1) may be, for example, natural rubber; a high cis-polyisoprene; a emulsion-polymerized styrene-butadiene copolymer; a solution-polymerized styrene-butadiene copolyemr (particularly, a solution-polymerized styrene-butadiene copolymer having a bound styrene content of 10 - 40% by weight and a vinyl content of 10 - 80% by weight); a high cis-polybutadiene obtained with a nickel, cobalt, titanium and/or neodymium catalyst; an ethylene-propylene type copolymer such as an ethylene- propylene copolymer, an ethylene-propylene-diene terpolymer or the like; a halogenated butyl rubber; a halogenated ethylene-propylene-diene terpolymer; a styrene-butadiene block copolymer or a hydrogenation product thereof; a styrene-isoprene copolymer or a hydrogenation product thereof; an acrylonitrile-butadiene copolymer; an acrylic rubber; a fluororubber; a chloroprene rubber; and a modified soft polyolefin. It is desired that the rubber (B) (1) be modified with a modifier during its production or after the production, so as to have at least one functional group selected from carboxyl group, hydroxyl group and epoxy group. Of the above-mentioned rubbers, preferred are an acrylonitrile-butadiene copolymer, an acrylic rubber, a fluororubber, an ethylene-propylene type copolymer and a modified soft polyolefin. Particularly preferred are an acrylonitrile-butadiene copolymer and an ethylene-propylene copolymer.

The rubber component (B) can be produced by copolymerizing the crosslinking monomer (B) (2) and the monomer (B) (3) having a carboxyl group and/or an epoxy group in the presence of the monomer or monomers for the rubber (B) (1) so that each of the amounts of the monomer (B) (2) and the monomer (B) (3) in the copolymer obtained becomes 0.01 - 20% by weight. The thus produced rubber component (B) has a gel content of at least 20%. Alternatively, the monomer having a carboxyl group and/or an epoxy group may be

reacted with the rubber (B) (1).

The amount of the rubber (B) (1) used is 70 - 99.98% by weight, preferably 80 - 99.8% by weight, more preferably 85 - 99% by weight of the rubber component (B).

It is very important that the rubber component (B) used in this invention has a specific average particle diameter, a specific gel content and a specific amount of functional group.

The average particle diameter of the rubber component (B) dispersed in the thermoplastic composition of this invention is 10 μm or less preferably 1 μm or less, more preferably 0.5 μm or less, most preferably 0.3 μm or less. When the particle diameter is more than 10 μm, the resulting thermoplastic composition has poor mechanical strengths and flex resistance.

The rubber component (B) used in this invention is required to have a gel content of at least 20%, preferably at least 50%, more preferably at least 70%. When the amount of the rubber crosslinked (gel content) is less than 20%, the resulting composition has a large permanent compression set and the deformed shape is not fully restored to the original shape. The gel content of the rubber component (B) can be controlled by varying the amount of the crosslinking monomer added. The crosslinking monomer includes, for example, aromatic compounds such as divinylbenzene, 1,3,5-trivinylbenzene and the like; diallyl ester compounds such as diallyl phthalate, diallyl fumarate and the like; and (meth)acrylic acid esters such as trimethylolpropane trimethacrylate, ethylene glycol dimethacrylate, tetraethylene glycol dimethacrylate, 1,3-butanediol dimethacrylate, diethylene glycol dimethacrylate, triethylene glycol dimethacrylate, triethylene glycol diacrylate and the like.

The amount of the crosslinking monomer (B) (2) used is 0.01 - 20% by weight of the rubber component (B). When the amount is less than 0.01% by weight, the desired gel content cannot be achieved. When the amount is more than 20% by weight the flexibility is inferior and cost is increased.

The carboxyl group-containing monomer (B) (3)-1 includes mono- and dicarboxylic acids such as acrylic acid, methacrylic acid, crotonic acid, maleic acid, fumaric acid, itaconic acid and the like. Further, there can be used the anhydrides of dicarboxylic acids, the monoalkyl esters represented by the following general formula and monoamides:

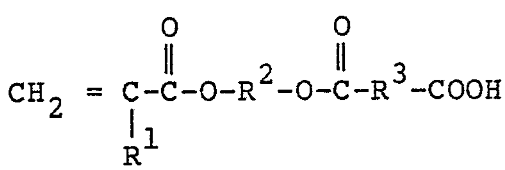

wherein $R^1$ is a hydrogen atom or an alkyl group, $R^2$ is a $C_2$-$C_6$ alkylene group; and $R^3$ is phenylene group, a cyclohexylene group, a $C_2$-$C_6$ alkylene group or a divalent unsaturated hydrocarbon group. Specifically, the carboxyl group-containing olefinically unsaturated monomers include compounds represented by the following formulas:

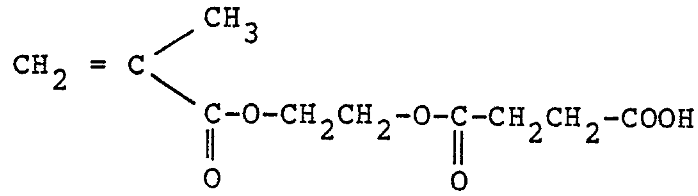 ,

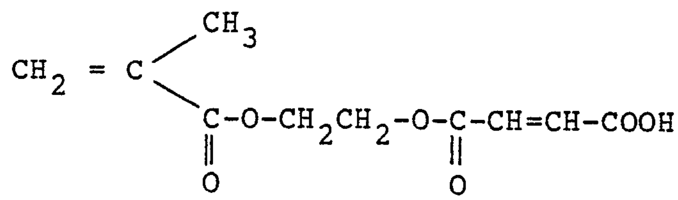 ,

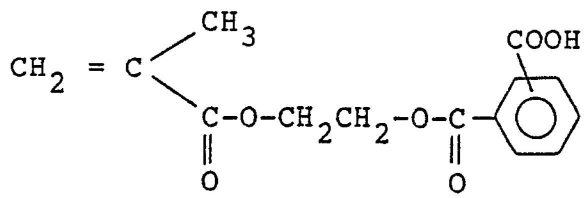 ,

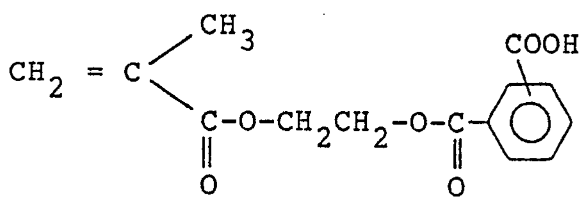 ,

and further mono-(meth)acryloyloxyethyl succinate, mono-(meth)acryloyloxyethyl maleate, mono-(meth)acryloyloxyethyl phthalate, mono-(meth)acryloyloxyethyl hexahydrophthalate, mono-(meth)acryloyloxypropyl succinate, mono-(meth)acryloyloxypropyl maleate, mono-(meth)acryloyloxypropyl phthalate, mono-(meth)acryloyloxypropyl hexahydrophthalate, mono-(meth)acryloyloxyethyl adipate, mono-(meth)acryloyloxyethyl malonate and the like. Of these carboxyl group-containing olefinically unsaturated monomers, preferred are acrylic acid and methacrylic acid.

The epoxy group-containing olefinically unsaturated monomer (B) (3)-2 includes all compounds having an olefinic unsaturation and an epoxy group in the molecule. As the epoxy group-containing vinyl compound, preferred are compounds represented by the general formula:

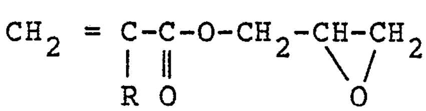

wherein R is a hydrogen atom, a lower alkyl group or a lower alkyl group substituted by a glycidyl ester group and compounds represented by the general formula:

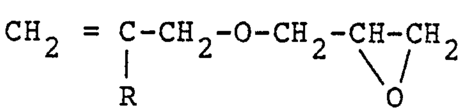

wherein R has the same meaning as defined above.

Specific examples of the epoxy group-containing olefinically unsaturated monomer (B) (3)-2 are preferably glycidyl acrylate, glycidyl methacrylate, glycidyl itaconate and allyl glycidyl ether. Particularly preferred are

glycidyl acrylate, glycidyl methacrylate and allyl glycidyl ether. These epoxy group-containing olefinically unsaturated compounds are used alone or in combination of two or more.

The ratio of the unsaturated monomer (B) (3) having a carboxyl group and/or an epoxy group, in the rubber component (B) is 0.01 - 20% by weight, preferably 0.1 - 15% by weight, more preferably 0.5 - 10% by weight, of the rubber component (B). When the ratio is less than 0.01% by weight, no substantial effects can be expected. When the ratio is more than 20% by weight, the resulting rubber component has too high a glass transition temperature and the resulting thermoplastic composition has poor low-temperature properties.

The proportions of the components in the thermoplastic polymer composition of this invention are 20 - 99% by weight of the polyamide and/or polyamide elastomer (A) and 80 - 1% by weight of the rubber component (B). When the proportion of the component (A) is less than 20% by weight, the resulting composition has a significantly reduced processability and a deteriorated thermoplasticity and accordingly cannot be processed into a practically usable molded article. The proportions are preferably 40 - 90% by weight of the component (A) and 60 - 10% by weight of the component (B).

In order for the thermoplastic polymer composition of this invention to exhibit the intended effects, it is preferable to mix the components (A) and (B) at a temperature not lower than the melting point of the component (A), namely, the polyamide and/or the polyamide elastomer. When the mixing temperature is lower than the melting of the component (A), the mixing requires a higher torque and becomes insufficient, and the resulting composition cannot exhibit sufficiently its physical properties. When the mixing temperature is too high, the rubber component (B) undergoes thermal degradation, etc. and the resulting composition cannot have high physical properties.

Hence, the mixing temperature is preferably at least 5°C, more preferably at least 10°C higher than the melting point of the component (A), and it is preferably 300°C or less, more preferably 280°C or less.

The co-use of the polyamide (i) and the polyamide elastomer (ii) as the component (A) enables the resulting thermoplastic composition to have a more improved oil resistance and impact resistance and wide properties ranging from hard to soft.

The preferable proportions of the components in such a thermoplastic composition are as follows:

The proportion of the polyamide (A) (i) is preferably 10 - 90% by weight, more preferably 15 - 85% by weight, based on the total weight of the (A) and (B) components. When the proportion is 10% by weight or more, the composition has an excellent oil resistance. When the proportion is less than 90% by weight, the composition has an excellent extrusion moldability and a uniform molded article can be produced thereform. The proportion of the polyamide elastomer (A) (ii) is preferably 3 - 80% by weight, more preferably 5 - 50% by weight. When the proportion is not less than 3% by weight, the composition can have a lower permanent compression set. When the proportion is not more than 80% by weight, the composition has an excellent oil resistance. The proportion of the rubber component (B) is preferably 3 - 70% by weight, more preferably 5 - 60% by weight. When the proportion is not less than 3% by weight, the composition has an excellent impact resistance. When the proportion is not more than 70% by weight, the composition has an excellent extrusion moldability.

In the case of the thermoplastic polymer composition in which the polyamide (A) (i) and the polyamide elastomer (A) (ii) are co-used, any composition ranging from a resinous hard composition to a highly flexible composition can be produced by appropriately varying the proportions of the components in the composition. When the proportion of the polyamide elastomer (A) (ii) and the rubber component (B) is higher, a flexible composition is obtained, while when this proportion is lower, a resinous composition is obtained. The preferable proportions of the components for obtaining a flexible composition are less than 50% by weight of the polyamide (A) (i) and at least 50% by weight of the polyamide elastomer (A) (ii) and the rubber component (B). The preferable proportions of the components for obtaining a resinous composition are at least 70% by weight of the polyamide (A) (i) and less than 30% by weight of the polyamide elastomer (A) (ii) and the rubber component (B).

By mixing a combination of a low melting polyamide (A) (i)-1 and a high melting polyamide (A) (i)-2 as the polyamide (A) (i) with the rubber component (B) in particular proportions, the heat resistance, heat discoloration resistance, tensile strength, elongation and impact resistance of the composition can further be improved.

The low melting polyamide (A) (i)-1 has a melting point of less than 200°C, preferably 160 - 190°C. Examples are nylon 11, nylon 12, nylon 6/12, nylon 6/6-6 and the like. Of these, polylactams such as nylon 11, nylon 12 and the like are particularly preferred.

The high melting polyamide (A) (i)-2 has a melting point of at least 200°C, preferably 200 - 250°C. Examples are polylactams such as nylon 6 and the like; polyamides obtained from a dicarboxylic acid and a diamine, such as nylon 4-6, nylon 6-6, nylon 6-10, nylon 6-12 and the like; copolymeric polyamides such as nylon 6/6-6, nylon 6/6-10, nylon 6/12, nylon 6-6/12, nylon 6/6-6/6-10, nylon 6/6-6/12 and the like; nylon 6/6-T (T is a terephthalic acid component); and semi-aromatic polyamides obtained from an aromatic dicarboxylic acid (e.g. isophthalic acid) and metaxylenediamine or an alicyclic diamine. Of these, nylon 6, nylon 6-6 and nylon 4-6 are particularly preferable.

In the case of the combination of the low melting polyamide (A) (i)-1 and the high melting polyamide (A) (i)-2, the following proportions of the components are preferable:

The proportion of the low melting polyamide (A) (i)-1 is preferably 5 - 70% by weight, more preferably 10 - 60% by weight. When the proportion is not less than 5% by weight, the composition has an excellent heat

discoloration resistance. When the proportion is not more than 70% by weight, the composition has an excellent impact resistance.

The proportion of the high melting polyamide (A) (i)-2 is preferably 15 - 85% by weight, more preferably 15 - 80% by weight. When the proportion is not less than 15% by weight, the composition has an excellent tensile strength. When the proportion is not more than 85% by weight, the composition has an excellent impact resistance.

The ratio of the rubber component (B) is preferably 5 - 70% by weight, more preferably 10 - 55% by weight, and most preferably 10 - 45% by weight. When the proportion is not less than 5% by weight, the composition has an excellent flexibility and an excellent impact resistance. When the proportion is not more than 70% by weight, the heat discoloration resistance is not lowered.

In the above composition, the weight ratio of the low melting polyamide (A) (i)-1 to the rubber component (B) is preferably 0.2 - 5, more preferably 0.3 - 3.

Such a polyamide composition can preferably be prepared by first melt-mixing the low melting polyamide (A) (i)-1 in an amount of at least 50% by weight, preferably at least 70% by weight and more preferably 90 - 100% by weight of the necessary amount of (A) (i)-1, the rubber component (B) in an amount of at least 50% by weight, preferably at least 70% by weight and more preferably 90 - 100% by weight of the necessary amount of (B) and the high melting polyamide (A) (i)-2 in an amount of not more than 50% by weight, preferably not more than 30% by weight and more preferably 10 - 0% by weight of the necessary amount of (A) (i)-2 to obtain a mixture and then melt-mixing the mixture with the rests of the components (A) (i)-1, (A) (i)-2 and (B). The resulting composition has more improved resistance to heat discoloration.

In the above mixing, the rubber component (B) is surrounded by the low melting polyamide (A) (i)-1 in the first mixing stage, whereby the contact of the rubber component (B) with oxygen, etc. is prevented. Then, the mixture is mixed with the high melting polyamide (A) (i)-2 at a higher temperature, so that the rubber component (B) is prevented from thermal degradation in the second mixing stage.

In melt-mixing the components to produce a thermoplastic elastomer composition, there can be used a known mixing apparatus such as an open type mixing roll, a closed type Banbury mixer, an extruder, a kneader, a continuous mixer or the like.

The thermoplastic elastomer composition of this invention may comprise, in addition to the previously mentioned essential components, a filler (e.g. calcium carbonate, calcium silicate, clay, kaolin, talc, silica, diatomaceous earth, mica powder, asbestos, alumina, barium sulfate, aluminum sulfate, calcium sulfate, basic magnesium carbonate, molybdenum disulfide, graphite, carbon fiber, glass fiber or the like) and a colorant (e.g. carbon black, ultramarine, titanium oxide, zinc white, red iron oxide, prussian blue, azo pigments, nitroso pigments, lake pigments, phthalocyanine pigments or the like) in such amounts that the flowability and mechanical strengths of the composition are not impaired.

The composition of this invention may further comprise a mineral oil-based softener for rubber which is called process oil or extending oil, a plasticizer (e.g. dioctyl phthalate, dibutyl phthalate, diethyl phthalate, dimethyl phthalate, tricresyl phosphate, triethyl phosphate, tributyl phosphate, tri-2-ethylhexyl phosphate, trimellitic acid esters, dioctyl adipate, dioctyl azelate, dioctyl sebacate, epoxyfatty acid esters or the like), a liquid rubber (e.g. liquid NBR, liquid acrylic rubber, liquid polybutadiene rubber or the like), and a plasticizer for nylon (e.g. benzenesulfonic acid butylamide, POBO manufactured by Yoshitomi Pharmaceutical industries, Ltd., SANSOCIZER manufactured by New Japan Chemical Co., Ltd.) in such amounts that the mechanical strengths of the composition are not impaired, whereby the flowability of the composition can be Improved.

Furthermore, to the composition of this invention can be added, during the mixing of the components, a phenylenediamine type antioxidant (e.g. NOCRAC CD, NOCRAC TD, NOCRAC G1 and NOCRAC WHITE manufactured by Ohuchi Shinko Industry Co., Ltd.), an imidazole type antioxidant (e.g. NOCRAC MB and NOCRAC MMB manufactured by Ohuchi Shinko Industry Co., Ltd.) and a hindered phenol type antioxidant (e.g. BHT, NOCRAC 300).

The thermoplastic polymer composition of this invention can appropriately be blended with the following polymers: Aromatic vinyl-conjugate diene block copolymers (e.g. styrene-butadiene block copolymer, styrene-butadiene-styrene block copolymer, styrene-butadiene-styrene radial tereblock copolymer and the like), their hydrides, polypropylene, polyvinyl chloride, polycarbonate, PET, PBT, polyacetal, epoxy resin, polyvinylidene fluoride, polysulfone, ethylene-vinyl acetate copolymer, PPS resin, polyether-ether-ketone, PPO resin, styrene-methyl methacrylate copolymer, styrene-maleic anhydride copolymer, rubber-modified PPO resin, styrene-maleimide copolymer, rubber-modified styrene-malelmide copolymer, other elastomers than polyester elastomers (e.g. polyamide elastomers, thermoplastic elastomers and the like), etc.

The possible applications of the thermoplastic composition of this invention include automobile parts such as body panel, bumper parts, side shield molding, steering wheel, joint boots, struct suspension boots handle and the like; footwears such as shoe sole, sandal and the like; electric components such as wire-coating, connector, cap plug and the like; leisure goods such as grips for golf club, baseball bat, automobile and motorcycle, swimming fin, swimming goggle and the like; elemental materials for gaskets, waterproof cloths, hydraulic hoses, fuel hoses, freon hoses, power steering hoses, coil tubes, packings, rolls, garden hoses, belts, vibration-damping material for vibration-damping steel plate and the like.

DESCRIPTION OF PREFERRED EMBODIMENTS

This invention will be described in more detail below referring to Examples. However, this invention should not be interpreted to be restricted to these Examples. Part is by weight in the Examples unless otherwise specified.

Example 1

With the following emulsion polymerization recipe, emulsion polymerization was conducted in an autoclave having an internal volume of 20 liters, under the following polymerization conditions:

| Emulsion polymerization recipe | |
|---|---|
| Monomers | |
| Acrylonitrile | 34 parts |
| Butadiene | 59 parts |
| Methacrylic acid | 6 parts |
| Divinylbenzene | 1 part |
| Water | 220 parts |
| Polyoxyethylene nonylphenyl ether (Emulgen manufactured by Kao Corp.) | 5 parts |
| tert-Dodecylmercaptan | 0.2 part |
| Ammonium persulfate | 0.25 part |
| Cyanoethylated diethanolamine | 0.15 part |
| Total | 325.6 parts |

When the conversion had reached 90%, 0.2 part, per 100 parts of the monomers, of hydroxylamine sulfate was added to terminate the polymerization. The resulting reaction mixture was heated and subjected to steam distillation at about 70° C under reduced pressure to recover unreacted monomers. To the distillation residue was added 2 parts of an alkylated phenol as an antioxidant. The resulting latex was placed in a pressure tube and heated to 110° C to coagulate the latex. The coagulum formed was dried under vacuum at 80° C to obtain a crosslinked, carboxyl-modified NBR rubber.

The NBR rubber (1 g) was cut into small pieces, and 100 g of methyl ethyl ketone was added thereto. The resulting mixture was allowed to stand overnight at 25° C and then subjected to a high speed centrifuge to precipitate the gel formed. The supernatant was removed by filtration. To the collected gel was added methyl ethyl ketone. The mixture was stirred and centrifugalized, and the supernatant was removed by filtration. This procedure was repeated twice, whereby 0.83 g of a gel-like rubber was obtained. Accordingly, the gel content in the crosslinked, carboxyl-modified NBR rubber was determined as 83%. 1.5 g of the crosslinked, carboxyl-modified NBR rubber obtained above was mixed with 1.5 g of nylon 11 (Rilsan BMN O P20 manufactured by TORAY INDUSTRIES, INC.) at 200° C using a 40-mmØ extruder. The resulting mixture was dried and formed into a sheet having a size of 2 mm (thickness) × 12 cm (length) × 10 cm (width) by means of a 10-once injection machine. JIS No. 3 dumbbell test pieces were punched out of the above sheet in accordance with JIS K 6301. The test pieces were subjected to tensile test in accordance with JIS K 6301. Also, hardness and permanent compression set were tested in accordance with JIS K 6301. The results are shown in Table 1.

Examples 2 to 4

The same procedure as in Example 1 was repeated except that the amounts of the nylon 11 and the crosslinked, carboxyl-modified NBR rubber were changed to 2.1 kg and 0.9 kg, respectively, or 2.7 kg and 0.3 kg, respectively, or 0.9 kg and 2.1 kg, respectively, to obtain the results shown in Table 1.

Examples 5 to 8

The same procedure as in Example 1 was repeated, except that the nylon 11 was replaced by a polyamide elastomer (PEBAX 5533 manufactured by ATOCHEM) to obtain the results shown in Table 1.

Example 9

The same procedure as in Example 6 was repeated, except that the amount of the crosslinking monomer (divinylbenzene) for the crosslinked, carboxyl-modified NBR was increased to 3% by weight, whereby the gel content (the content of crosslinked rubber) in the crosslinked, carboxyl-modified NBR was varied, to obtain the results shown in Table 1.

Example 10

The same procedure as in Example 6 was repeated, except that the crosslinked epoxy-modified NBR was replaced by a crosslinked, epoxy-modified NBR obtained in the same manner as in Example 1, except that the following monomers were used, to obtain the results shown in Table 1:

Monomers

| | |
|---|---|
| Acrylonitrile | 34 parts |
| Butadiene | 59 parts |
| Glycidyl methacrylate | 6 parts |
| Divinylbenzene | 1 part |
| Total | 100 parts |

Comparative Example 1

The same procedure as in Example 6 was repeated, except that a crosslinked, carboxyl-unmodified NBR (JSR NBR N210S manufactured by Japan Synthetic Rubber Co., Ltd.) was substituted for the carboxyl-modified crosslinked NBR, to obtain the results shown in Table 2.

It is clear from Table 2 that the composition using the crosslinked, unmodified NBR has a very low tensile strength and elongation and practically inferior mechanical properties.

Comparative Example 2

The dynamic vulcanization method proposed in Japanese Patent Application Kokai (Laid-Open) No. 105925/77 was carried out. The dynamic vulcanization method requires a long time, and hence was conducted using a Brabender mixer.

In a Brabender mixer, 25 g of a polyamide elastomer (PEBAX 5533 manufactured by ATOCHEM) and 25 g of an NBR (JSR NBR N230 manufactured by Japan Synthetic Rubber Co., Ltd.) were melt-mixed at 180°C for 5 minutes at 60 r.p.m. Then, 0.5 g of a peroxide (Perhexa 25B) was added and the resulting mixture was subjected to dynamic crosslinking for a further 5 minutes. The composition obtained did not substantially flow even at 230°C when it was subjected to flow test by a Koka type flow tester. Therefore, it was judged that the composition could not be injection molded, and hence, the composition was press molded.

The press molding was conducted by heating the above composition for 10 minutes by means of a hot press at 190°C, then transferred to a cold press at 30°C, and press-molded therein at a pressure of 100 $kg/cm^2$•G while being cooled. From the resulting sheet of 1 mm (thickness) × 11 cm (length) × 9 cm (width) was punched out JIS No. 3 dumbbell test pieces in accordance with JIS K 6301. The test pieces were subjected to tensile test in accordance with JIS K 6301. Hardness and permanent compression set were also tested in accordance with JIS K 6301. The results are shown in Table 2.

As is clear from Table 2, the composition prepared in accordance with the dynamic vulcanization method is inferior in flowability and also low in mechanical strengths, and hence, it is supposed to be unable to be used in practice.

Comparative Example 3

A crosslinked, carboxyl-modified NBR was produced in the same manner as in Example 1, except that no emulsifier was used in the polymerization. The rubber after the polymerization was ground by a grinder to obtain a rubber powder having an average particle diameter of 50 μm. In the same manner as in Example 6, the powder was melt-mixed with a polyamide elastomer (PEBAX 5533) and the resulting composition was evaluated. The results are shown in Table 2. The composition had a low mechanical strength and a rough surface. Thus, the particle diameter of the rubber is required to be small in order for the composition to exhibit

satisfactory properties.

Comparative Example 4

A carboxyl-modified NBR was produced with the same recipe as in Example 1, except that no crosslinking monomer was used. Then, a composition was prepared and evaluated for physical properties in the same manner as in Example 6. The results are shown in Table 2. When the carboxyl-modified NBR is not crosslinked, the permanent compression set is large and the composition is undesirable as a thermoplastic elastomer.

Comparative Example 5

To the composition of Comparative Example 4 was added 3 parts of zinc white, and these were melt-mixed. The resulting composition was evaluated. The results are shown in Table 2. The vulcanization with a metal salt could not improve the permanent compression set of the composition.

Example 11

The crosslinked, epoxy-modified NBR of Example 10 was blended with nylon 12 (Daiamide L2121 of Daicel Co.) in the proportion shown in Table 1. The resulting composition was evaluated. The results are shown in Table 1.

Example 12

A crosslinked, carboxyl-modified styrene-butadiene copolymer rubber was produced in the same manner as in Example 1, except that the monomer composition of Example 1 was changed to the following, and the rubber was blended with the polyamide elastomer (PEBAX 5533), after which the resulting composition was evaluated in the same manner as in Example 6, to obtain the results shown in Table 1:

Table 1:

Monomers

| | |
|---|---|
| Styrene | 21 parts |
| Butadiene | 72 parts |
| Methacrylic acid | 6 parts |
| Divinylbenzene | 1 part |
| Total | 100 parts |

Comparative Example 6

A crosslinked, carboxyl-modified NBR having a gel content of 13% was produced in the same manner as in Example 1, except that the amount of divinylbenzene was decreased to 0.001 part. The rubber was blended with the polyamide elastomer (PEBAX 5533) in the same manner as in Example 6. The resulting composition was evaluated for properties. The results are shown in Table 2.

Evaluation of flex resistance

The thermoplastic compositions obtained in Examples 6 and 10 and Comparative Example 2 were evaluated for flex resistance by means of a Ross flex tester in accordance with JIS K 6301. The resulting lengths of cracks formed due to flexing are shown in the accompanying drawings.

It is clear from the drawings that the thermoplastic compositions obtained according to this invention has superior flex resistance.

Table 1

| | | Example 1 | Example 2 | Example 3 | Example 4 |
|---|---|---|---|---|---|
| Compounding recipe (parts) | (A) (i) Polyamide (nylon 11) | 50 | 70 | 90 | 30 |
| | (i) Polyamide (nylon 12) | - | - | - | - |
| | (ii) Polyamide elastomer (PEBAX #5533) | - | - | - | - |
| | (B) Rubber component | | | | |
| | Crosslinked, carboxyl-modified NBR | 50 | 30 | 10 | 70 |
| | Crosslinked, epoxy-modified NBR | - | - | - | - |
| | Name of crosslinking monomer | Divinyl-benzene | " | " | " |
| | Amount of copolymerized monomer (% by weight) | 1 | 1 | 1 | 1 |
| | Gel content (% by weight) | 83 | 83 | 83 | 83 |
| | Particle diameter of crosslinked rubber (μm) | 0.08 | 0.08 | 0.08 | 0.08 |

- cont'd -

Table 1 (cont'd)

| | | | | | | |
|---|---|---|---|---|---|---|
| Physical properties | Hardness (Shore D) | | 61 | 66 | 70 | 56 |
| | Tensile strength ($kg/cm^2$) | | 150 | 220 | 310 | 100 |
| | Tensile elongation (%) | | 260 | 310 | 380 | 210 |
| | Permanent compression set (70°C, 22 hr) (%) | | 70 | 74 | - | 65 |
| Heat resistance | Change of hardness (Shore D) | 120°C x 7 days | 0 | 0 | +1 | 0 |
| | Change of tensile strength (%) | | +33 | +10 | -10 | +30 |
| | Change of tensile elongation (%) | | -15 | -18 | -20 | -15 |
| Oil resistance | Change of tensile strength (%) | JIS No. 3 oil, 120°C x 70 hr | +6 | +6 | -1 | +10 |
| | Change of tensile elongation (%) | | -8 | -5 | -7 | -10 |
| | Change of volume (%) | | +4 | +2 | -2 | +3 |

- cont'd -

Table 1 (cont'd)

| Example | | | | | | | |
|---|---|---|---|---|---|---|---|
| 5 | 6 | 7 | 8 | 9 | 10 | 11 | 12 |
| - | - | - | - | - | - | - | - |
| - | - | - | - | - | - | 50 | - |
| 30 | 50 | 70 | 90 | 50 | 50 | - | 50 |
| 70 | 50 | 30 | 10 | 50 | - | - | 50* |
| - | - | - | - | - | 50 | 50 | - |
| " | " | " | " | " | " | " | " |
| 1 | 1 | 1 | 1 | 3 | 1 | 1 | 1 |
| 83 | 83 | 83 | 83 | 98 | 85 | 85 | 75 |
| 0.08 | 0.08 | 0.08 | 0.08 | 0.09 | 0.09 | 0.09 | 0.18 |

Table 1 (cont'd)

| | | | | | | | |
|---|---|---|---|---|---|---|---|
| 33 | 44 | 55 | 57 | 45 | 45 | 62 | 43 |
| 200 | 250 | 310 | 410 | 230 | 210 | 190 | 220 |
| 490 | 540 | 560 | 620 | 530 | 490 | 250 | 520 |
| 45 | 50 | 61 | 67 | 45 | 55 | 65 | 49 |
| 0 | 0 | 0 | 0 | 0 | 0 | 0 | 0 |
| -7 | -9 | -7 | -10 | -8 | -5 | +20 | -15 |
| -15 | -19 | -20 | -17 | -15 | -18 | -16 | -21 |
| -18 | -22 | -20 | -25 | -20 | -15 | +5 | - |
| -10 | -7 | -5 | -7 | -9 | -5 | -8 | - |
| +13 | +16 | +16 | +18 | +15 | +17 | +3 | - |

Note: * Crosslinked, carboxyl-modified SBR.

Table 2

| | | Comparative Example No. | | | | | |
|---|---|---|---|---|---|---|---|
| | | 1 | 2 | 3 | 4 | 5 | 6 |
| Compounding recipe (parts) | (A) Polyamide elastomer (PEBAX #5533) | 50 | 50 | 50 | 50 | 50 | 50 |
| | (B) Rubber component | | | | | | |
| | Crosslinked, carboxyl-modified NBR | - | - | 50 | - | - | 50 |
| | Crosslinked NBR (N210S) | 50 | - | - | - | - | - |
| | Carboxyl-modified NBR | - | - | - | 50 | 50 | - |
| | NBR (N230) | - | 50 | - | - | - | - |
| | Name of crosslinking monomer | Divinyl-benzene | Not used | Divinyl-benzene | Not used | Not used | Divinyl-benzene |
| | Amount of crosslinking monomer in rubber component (% by weight) | 1 | - | 2 | - | - | 0.001 |
| | Gel content in rubber component (% by weight) | 85 | 90 or more | 92 | 5 or less | 5 or less | 13 |

- cont'd -

Table 2 (cont'd)

| | | | | | | | |
|---|---|---|---|---|---|---|---|
| | Particle diameter of crosslinked rubber (μm) | 0.07 | - | 50 | - | - | - |
| Physical Properties | Hardness (Shore D) | 44 | 40*1 | 42 | 41 | 41 | 42 |
| | Tensile strength ($kg/cm^2$) | 120 | 110*1 | 135 | 165 | 210 | 195 |
| | Tensile elongation (%) | 290 | 210*1 | 220 | 550 | 600 | 490 |
| | Perment compression set (70°C, 22 hr) (%) | 55 | 50*1 | 65 | 95 | 98 | 95 |

Note: *1 Evaluated with a pressed sheet.

Examples 13 to 19

The following (A) (i) polyamide, (A) (ii) polyamide elastomer and (B) rubber component were used in Examples 13 to 19:

(A) (i) Polyamide

A-1: Nylon 6 (Amilan CM1006 manufactured by TORAY INDUSTRIES, INC.)

A-2: Nylon 12 (Rilsan AMNO manufactured by TORAY INDUSTRIES, INC.)

(A) (ii) Polyamide elastomer

A-3: PEBAX 5533 manufactured by ATOCHEM

(B) Rubber component

B-1: Crosslinked, carboxyl-modified NBR (same NBR as used in Example 1)

B-2: Crosslinked, epoxy-modified NBR This NBR was obtained in the same manner as in Example 1, except that the methacrylic acid in the monomer composition was replaced by glycidyl methacrylate. This NBR had a Mooney viscosity $ML_{1+4}$ (100° C) of 85 and a gel content of 85%.

Table 3

Compounding Recipes and Evaluation Results of Physical Properties

| | Examples | | | | | | |
|---|---|---|---|---|---|---|---|
| | 13 | 14 | 15 | 16 | 17 | 18 | 19 |
| Compounding recipe (parts) | | | | | | | |
| (A) (i) Polyamide component | | | | | | | |
| A-1 (nylon 6) | - | - | - | 30 | 70 | 85 | - |
| A-2 (nylon 12) | 40 | 30 | 20 | - | - | - | 25 |
| (A) (ii) Polyamide elastomer component | | | | | | | |
| A-3 (PEBAX #5533) | 10 | 20 | 30 | 35 | 15 | 7.5 | 25 |
| (B) Rubber component | | | | | | | |
| B-1 (crosslinked, carboxy-modified NBR) | 50 | 50 | 50 | 35 | 15 | 7.5 | - |
| B-2 (crosslinked, epoxy-modified NBR) | - | - | - | - | - | - | 50 |

- cont'd -

Table 3 (cont'd)3

| | | | | | | | |
|---|---|---|---|---|---|---|---|
| Physical properties | | | | | | | |
| Hardness (Shore D) | 47 | 46 | 41 | 45 | 80 | 82 | 45 |
| Tensile strength (kg/cm$^2$) | 190 | 180 | 185 | 270 | 400 | 440 | 165 |
| Tensile elongation (%) | 150 | 270 | 350 | 90 | 370 | 330 | 350 |
| Elongation set (%) | 25 | 15 | 10 | 18 | - | - | 13 |
| Izod impact strength (kg·cm/cm) | Not broken | Not broken | Not broken | Not broken | Not broken | 20 | Not broken |
| Oil resistance (JIS No. 3 oil, 120°C x 70 hr) | | | | | | | |
| Change of tensile strength (%) | +6 | -3 | -10 | -10 | +10 | +5 | -8 |
| Change of tensile elongation (%) | -8 | -7 | -5 | -11 | -15 | -10 | -5 |
| Change of volume (%) | +4 | +4 | +7 | +15 | +2 | +1 | +5 |
| Tube extrudability | | | | | | | |
| Degree of uneven thickness of molded tube (%) | 15 | 7 | 10 | 24 | - | - | 11 |
| Discharging rate (g/min) | 27 | 25 | 24 | 28 | - | - | 25 |

Examples 20 to 23

A low melting polyamide, a crosslinked, carboxyl-modified NBR and the antioxidants shown in Table 4 were kneaded in the proportions shown in Table 4, at 210° C by means of a 50-mmØ extruder. The resulting mixture was kneaded with the high melting polyamide shown in Table 4, in the proportion shown in Table 4, at 240° C using a 50-mmØ extruder, whereby four polyamide compositions were obtained. They were evaluated according to the following methods to obtain the results shown in Table 4:

Preparation of test pieces

By means of a 10-ounce injection machine, there were molded, from each of the above polyamide compositions at 240° C, sheets of 2 mm (thickness) × 12 cm (length) × 10 cm (width) and test pieces for Izod impact strength of 0.64 mm (thickness) × 5 cm (length) × 1.27 cm (width). From the sheets were punched out JIS No. 3 dumbbell test pieces for tensile strength and tensile elongation in accordance with JIS K 6301.

Hardness (Shore D) was measured in accordance with JIS K 6301.

Resistance to heat discoloration was measured by visually examining the color tone of the sheet.

Table 4

| | Examples | | | |
|---|---|---|---|---|
| | 20 | 21 | 22 | 23 |
| Compounding recipe (parts) | | | | |
| (A) (i)-1 Low melting polyamide | | | | |
| Nylon 11 (melting point: 186°C) | - | - | - | 15 |
| Nylon 12 (melting point: 178°C) | 15 | 25 | 25 | - |
| (A) (i)-2 High melting polyamide | | | | |
| Nylon 6 (melting point: 225°C) | 70 | 50 | 25 | - |
| Nylon 6-6 (melting point: 265°C) | - | - | - | 70 |
| (B) Rubber component | | | | |
| Crosslinked, carboxyl-modified NBR (B-1) | 15 | 25 | 50 | 15 |
| (C) Antioxidant | | | | |
| NOCRAC MB*1 | 0.08 | 0.13 | 0.25 | 0.08 |
| NOCRAC CD*2 | 0.08 | 0.13 | 0.25 | 0.08 |
| (A) (i)-1/(B) | 1.0 | 1.0 | 0.5 | 1.0 |

- cont-d -

Table 4 (cont'd)

| | | | | |
|---|---|---|---|---|
| Physical properties | | | | |
| Hardness (Shore D) | 80 | 75 | 63 | 82 |
| Tensile strength ($kg/cm^2$) | 400 | 350 | 190 | 430 |
| Tensile elongation (%) | 110 | 90 | 350 | 90 |
| Izod impact strength (kg cm/cm) | 27 | Not broken | Not broken | 31 |
| Resistance to heat discoloration | Good | Good | Good | Good |

Note: *1 An imidazole type antioxidant manufactured by Ohuchi Shinko Chemical Industry Co., Ltd.

*2 A phenylenediamine type antioxidant manufactured by Ohuchi Shinko Chemical Industry Co., Ltd.

Application Example 1

A mixture consisting of 49.5% by weight of nylon 12 (AESNOTL manufactured by TORAY RILSAN), 49.5% by weight of a partially crosslinked, carboxyl-modified NBR and 1.0% by weight in total of two antioxidants (0.5% by weight each of NOCRAC MB and NOCRAC CD manufactured by Ohuchi Shinko Chemical Industry Co., Ltd.) was subjected to extrusion by a 50-mm Dulmage screw extruder to obtain a composition. The physical properties of the composition are shown in Table 5.

The composition was subjected to lateral extrusion by a 30-mm∅ extruder to obtain a hose having an inside diameter of 6 mm and an outside diameter of 8 mm. The operating conditions of the extruder were as follows:

Cylinder temperatures: $C_1$ 210°C, $C_2$ 220°C, $C_3$ 230°C, $C_4$ 240°C
Die temperature: 240°C
Revolution: 25 r.p.m.
Take-off speed: 90-120 cm/min.

The hose was subjected to the following performance tests to obtain the results shown in Table 5:

(Oil resistance test)

The hose was immersed in JIS No. 3 oil at 120°C for 70 hours and then change of hardness, change of tensile strength, change of tensile elongation and change of volume were determined.

(Heat-aging resistance test)

The hose was aged in a gear oven at 120°C for 168 hours and then change of hardness, change of tensile strength and change of tensile elongation were determined.

(Gasoline resistance test)

The hose was immersed in gasoline at room temperature for 70 hours and then change of hardness, change of tensile strength, change of tensile elongation and change of volume were determined.

(Hot water resistance test)

The hose was immersed in hot water at 100°C for 168 hours and then change of hardness, change of tensile strength, change of tensile elongation and change of volume were determined.

(Freon gas permeability)

Freon Gas R22 was filled in the hose in an amount of about 20% by volume based on the internal volume of the hose and the hose was allowed to stand for 200 hours at 25°C. Then, the weight of the freon gas permeated per unit area of the hose was measured.

Application Example 2

In the same manner as in Application Example 1, a mixture consisting of 85% by weight of nylon 12 (AESNOTL manufactured by TORAY RILSAN), 14.5% by weight of a partially crosslinked, carboxyl-modified NBR and 0.5% by weight in total of two antioxidants (0.25% by weight of NOCRAC MB and 0.25% by weight of NOCRAC CD) was subjected to complexing and molding. The results obtained are shown in Table 5.

Application Example 3

In the same manner as in Applciation Example 1, a mixture consisting of 70% by weight of nylon 12 (AESNOTL manufactured by TORAY RILSAN), 29.5% by weight of a partially crosslinked, carboxyl-modified NBR and 0.5% by weight in total of two antioxidants (0.25% by weight of NOCRAC MB and 0.25% by weight of NOCRAC CD) were subjected to complexing and molding. The results obtained are shown in Table 5.

Application Example 4

In the same manner as in Application Example 1, a mixture consisting of 25% by weight of nylon 12 (AESNOTL manufactured by TORAY RILSAN), 25% by weight of a polyamide elastomer (PEBAX #5533 manufactured by ATOCHEM), 49.5% by weight of a partially crosslinked, carboxyl-modified NBR and 0.5% by weight in total of two antioxidants (0.25% by weight of NOCRAC MB and 0.25% by weight of NOCRAC CD) was subjected to complexing and molding. The results obtained are shown in Table 5.

Table 5

| | Application Example | | | |
|---|---|---|---|---|
| | 1 | 2 | 3 | 4 |
| Hardness, Shore D | 63 | 73 | 68 | 51 |
| Hardness, JIS A | 97 | 100 | 99 | 96 |
| 100% Moldulus ($kg/m^2$) | 350 | 370 | 320 | 220 |
| Tensile strength ($kg/cm^2$) | 400 | 560 | 460 | 270 |
| Tensile elongation (%) | 150 | 190 | 170 | 140 |
| Bending modulus ($kg/m^2$) | 4600 | 9700 | 7200 | 1600 |
| Oil resistance test (JIS No. 3 oil, 120°C x 70 hr) | | | | |
| Change of hardness, JIS A | -3 | -2 | -3 | -4 |
| Change of tensile strength (%) | -4 | -6 | +1 | -8 |
| Change of tensile elongation (%) | +1 | -18 | -1 | -10 |
| Change of volume (%) | +7 | +3 | +2 | +13 |

- cont'd -

Table 5 (cont'd)

| | | | | |
|---|---|---|---|---|
| Heat resistance test (120°C x 168 hr) | | | | |
| Change of hardness, JIS A | 0 | -2 | -1 | 0 |
| Change of tensile strength (%) | +3 | +7 | +16 | +15 |
| Change of tensile elongation (%) | -15 | -26 | -19 | +1 |
| Gasoline resistance test (room temperature x 70 hr) | | | | |
| Change of hardness, JIS A | -1 | -2 | -1 | -4 |
| Change of tensile strength (%) | +2 | -5 | +7 | -20 |
| Change of tensile elongation (%) | -15 | -7 | +10 | -28 |
| Change of volume (%) | +4 | +1 | +1 | +13 |
| Hot water resistance test (100°C x 168 hr) | | | | |
| Change of hardness, JIS A | -1 | -6 | -3 | -3 |
| Change of tensile strength (%) | -5 | -29 | -10 | -19 |
| Change of tensile elongation (%) | -2 | -13 | -6 | -19 |
| Freon R-22 permeability (200 hr) | | | | |
| at 25°C ($mmg/cm^2$) | 2.60 | 0.08 | 0.34 | 5.0 |

## Claims

1. A thermoplastic polymer composition consisting essentially of
   (A) 20-99% by weight of (i) a polyamide, (ii) a polyamide elastomer or a mixture thereof and
   (B) 80-1% by weight of a rubber component which is a copolymer of (1) 70 - 99.98% by weight of a rubber, (2) 0.01-20% by weight of a crosslinking monomer and (3) 0.01-20% by weight of an olefinically unsaturated monomer having a carboxyl group, an epoxy group or both thereof and which has an average particle diameter of not more than 10 μm and a gel content of at least 20%.
2. The thermoplastic polymer composition according to Claim 1, wherein the rubber component (B) has an average particle diameter of not more than 1 μm.
3. The thermoplastic polymer composition according to Claim 1, wherein the rubber component (B) has a gel content of at least 70%.
4. The thermoplastic polymer composition according to Claim 1, wherein the weight ratio of the component (A)/the component (B) is 40-90/60-10.
5. The thermoplastic polymer composition according to Claim 1, wherein the component (A) is a mixture of (i) a polyamide and (ii) a polyamide elastomer.
6. The thermoplastic polymer composition according to Claim 5, wherein the weight ratio of the polyamide (A) (i)/the polyamide elastomer (A) (ii)/the rubber component (B) is 10-90/3-80/3-70.
7. The thermoplastic polymer composition according to Claim 5, wherein the weight ratio of the polyamide (A) (i)/the polyamide elastomer (A) (ii)/the rubber component (B) is 15-85/5-50/5-60.
8. The thermoplastic polymer composition according to Claim 1, wherein the component (A) consists of a low melting polyamide having a melting point of less than 200° C and a high melting polyamide having a melting point of at least 200° C.
9. The thermoplastic polymer composition according to Claim 8, wherein the weight ratio of the low melting polyamide/high melting polymamide/the rubber comonent (B) is 5-70/15-85/5-70.
10. The thermoplastic polymer composition according to Claim 9, wherein the weight ratio of the low melting polyamide/the high melting polyamide/the rubber component (B) is 10-60/15-80/10-55.
11. The thermoplastic polymer composition according to Claim 8, wherein the weight ratio of the low melting polyamide/the rubber component (B) is 0.5-5/1.
12. The thermoplastic polymer composition according to Claim 11, wherein the weight ratio of the low melting polyamide/the rubber component (B) is 0.3-3/1.
13. The thermoplastic polymer composition according to Claim 1, wherein the component (A) is at least one polyamide selected from the group consisting of nylon 6, nylon 11, nylon 12, nylon 4-6, nylon 6-6, nylon 6-10, nylon 6-12, nylon 6/6-6, nylon 6/6-10, nylon 6/12, nylon 6/6-12, nylon 6/6-6/6-10, nylon 6/6-6/12 and nylon 6-T(T: terephthalic acid).
14. The termoplastic polymer composition according to Claim 1, wherein the component (A) is at least one polyamide selected from the group consisting of nylon 6, nylon 6-6, nylon 11 and nylon 12.
15. The thermoplastic polymer composition according to Claim 1, wherein the component (A) is at least one polyamide elastomer selected from the group consisting of condensation products of a polyether having terminal hydroxyl groups with a polyamide.
16. The thermoplastic polymer composition according to Claim 15, wherein the polyether has an average molecular weight of 200 to 6,000.
17. The thermoplastic polymer composition according to Claim 15, wherein the polyether is at least one compound selected from the group consisting of polyoxyethylene glycol, polyoxypropylene glycol and polyoxytetramethylene glycol.
18. The thermoplastic polymer composition according to Claim 15, wherein the polyamide elastomer has a polyether content of 5 to 80% by weight.
19. The thermoplastic polymer composition according to Claim 15, wherein the polyamide used in the condensation is at least one member selected from the group consisting of nylon 6, nylon 11, nylon 6-6, nylon 6-9, nylon 6-10, nylon 6-12 and nylon 9-6.
20. The thermoplastic polymer composition according to Claim 15, wherein the polyamide used in the condensation has an average molecular weight of 300 to 15,000.
21. The thermoplastic polymer composition according to Claim 15, wherein the polyamide used in the condensation has an average molecular weight of 800 to 5,000.
22. The thermoplastic polymer composition according to Claim 1, wherein the rubber (B) (1) is at least one member selected from the group consisting of diene rubbers and non-diene rubbers.
23. The thermoplastic polymer composition according to Claim 1, wherein the rubber (B) (1) is at least one member selected from the group consisting of polyisoprene, polybutadiene, styrene-butadiene copolymer, acrylonitrile-butadiene copolymer, ethylene-propylene copolymer and ethylene-propylene-diene copolymer
24. The thermoplastic polymer composition according to Claim 1, wherein the rubber (B) (1) is at least one member selected from the group consisting of acrylonitrile-butadiene copolymer, acrylic rubber,

fluororubber, ethylene-propylene copolymer and ethylene-propylene-diene copolymer.

25. The thermoplastic polymer composition according to Claim 1, wherein the rubber component (B) is prepared by subjecting at least one monomer for the rubber (B) (1), the crosslinking monomer (B) (2) and the olefinically unsaturated monomer (B) (3) to copolymerization.

26. The thermoplastic polymer composition according to Claim 1, wherein the crosslinking monomer (B) (2) is at least one compound selected from the group consisting of divinylbenzene, trivinylbenzene, diallyl phthalate, diallyl fumarate, trimethylolpropane trimethacrylate, ethylene glycol dimethacrylate, tetraethylene glycol dimethacrylate, butandiol dimethacrylate, diethylene glycol dimethacrylate, triethylene glycol diacrylate.

27. The thermoplastic polymer composition according to Claim 1, wherein the crosslinking monomer is divinylbenzene.

28. The thermoplastic polymer composition according to Claim 1, wherein the component (B) (3) is at least one olefinically unsaturated monomer having a carboxyl group (B) (3)-1 selected from the group consisting of acrylic acid, methacrylic acid, crotonic acid, maleic acid, fumaric acid and itaconic acid.

29. The thermoplastic polymer composition according to Claim 28, wherein the olefinically unsaturated monomer (B) (3)-1 is selected from the group consisting of acrylic acid and methacrylic acid.

30. The thermoplastic polymer composition according to Claim 1, wherein the component (B) (3) is at least one olefinically unsaturated monomer having an epoxy group (B) (3)-2 selected from the group consisting of glycidyl acrylate, glycidyl methacrylate, glycidyl ethacrylate, glycidyl itaconate and allyl glycidyl ether.

31. The thermoplastic polymer composition according to the Claim 30, wherein the olefinically unsaturated monomer (B) (3)-2 is at least one member selected from the group consisting of glycidyl acrylate, glycidyl methacrylate and allyl glycidyl ether.

32. The thermoplastic polymer composition according to Claim 1, wherein the amount of the bound olefinically unsaturated monomer having a carboxyl group, an epoxy group or both thereof in the rubber component (B) is 0.1 to 15% by weight.

33. The thermoplastic polymer composition according to Claim 1, wherein the amount of the olefinically unsaturated monomer having a carboxyl group, an epoxy group or both thereof in the rubber component (B) is 0.5 to 10% by weight.

34. A process for producing a thermoplastic polymer composition according to Claim 8, which comprises first melt-mixing (A) (i)-1 a low melting polyamide in an amount of at least 50% by weight of the necessary amount thereof, (B) a rubber component in an amount of at least 50% by weight of the necessary amount thereof and (A) (i)-2 a high melting polyamide in an amount of less than 50% by weight of the necessary amount thereof, and then melt-mixing the resulting mixture with the rests of the components (A) (i)-1, (A) (i)-2 and (B).

35. A molding material for hose consisting essentially of a thermoplastic polymer composition of Claim 1.

36. The molding material for hose according to Claim 35, wherein the weight ratio of the component (A)/the component (B) is 25-95/75-5.

37. The molding material for hose according to Claim 35, wherein the weight ratio of the component (A)/the component (B) is 30-80/70-20.

38. The molding material for hose according to Claim 35, wherein the weight ratio of the component (A)/the component (B) is 40-70/60-30.

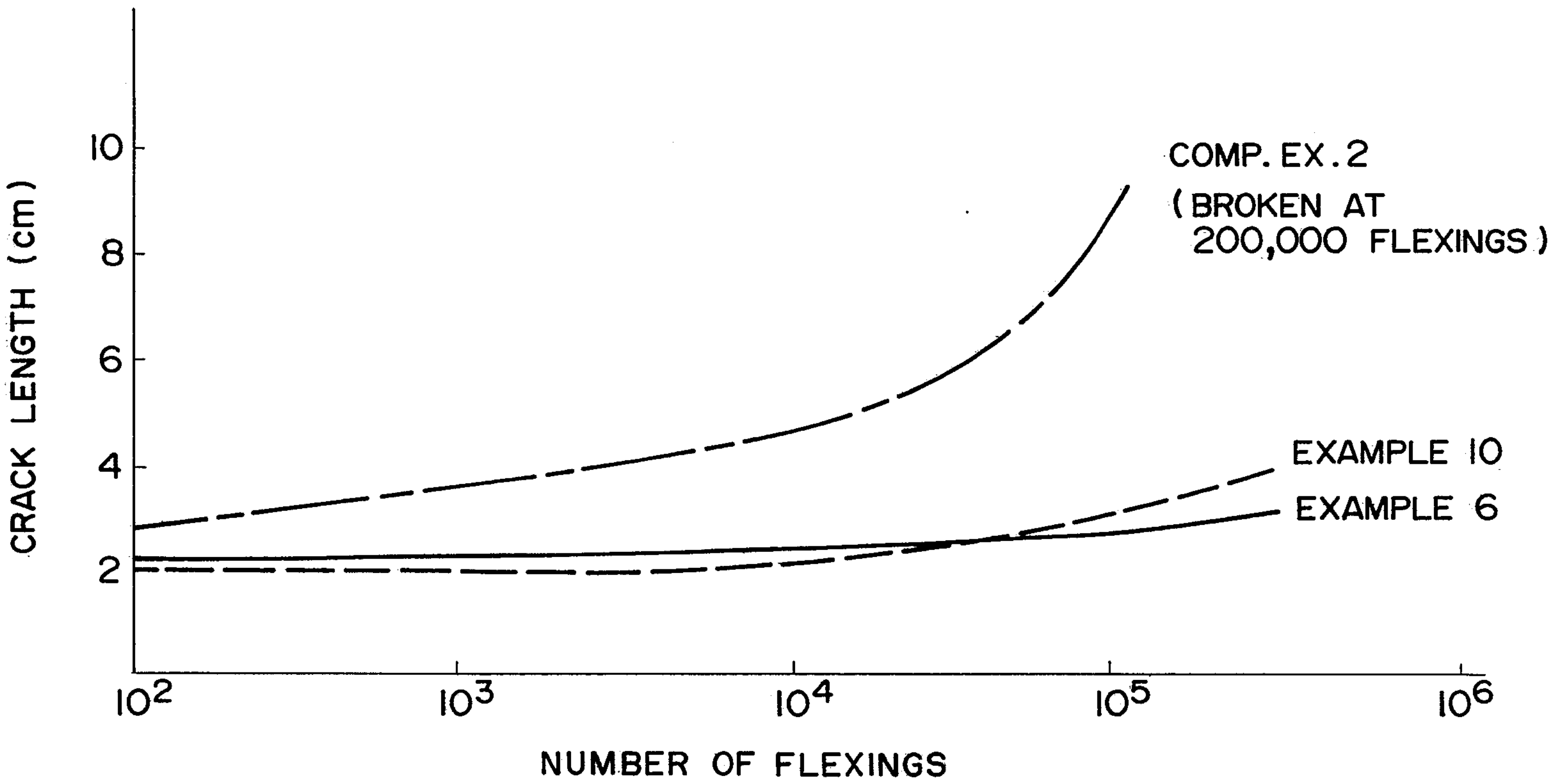
CRACK LENGTH (cm)
10
8
6
4
2
10^2
10^3
10^4
10^5
10^6
NUMBER OF FLEXINGS
COMP. EX. 2
(BROKEN AT
200,000 FLEXINGS)
EXAMPLE 10
EXAMPLE 6